(19) **Europäisches Patentamt / European Patent Office / Office européen des brevets**

(11) **EP 2 105 788 B1**

(12) **EUROPEAN PATENT SPECIFICATION**

(45) Date of publication and mention
of the grant of the patent:
**04.10.2017 Bulletin 2017/40**

(51) Int Cl.:
**G02F 1/167** *(2006.01)*  **G09G 3/34** *(2006.01)*

(21) Application number: **09156182.9**

(22) Date of filing: **25.03.2009**

(54) **E-paper apparatus and driving substrate thereof**

E-Papier-Vorrichtung und zugehöriges Steuerungssubstrat

Appareil de E-document et son substrat de commande

(84) Designated Contracting States:
**FI**

(30) Priority: **28.03.2008 TW 97111338**

(43) Date of publication of application:
**30.09.2009 Bulletin 2009/40**

(73) Proprietor: **Pervasive Display Co. Ltd.**
**Tainan City 717 (TW)**

(72) Inventor: **LIN, Chung-Jyh**
**710, Tainan County (TW)**

(74) Representative: **2K Patentanwälte Blasberg**
**Kewitz & Reichel**
**Partnerschaft mbB**
**Schumannstrasse 27**
**60325 Frankfurt am Main (DE)**

(56) References cited:
**EP-B1- 0 450 941     WO-A1-01/07961**
**US-A1- 2006 273 348     US-A1- 2007 216 686**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

### Field of Invention

The present invention relates to an e-paper apparatus and a driving substrate thereof.

### Related Art

As the information age is arriving, the demand to communicate with the information in the external world increases, the electronic display apparatus with the functions of information communication has become indispensable. Such display apparatuses that have been developed ranging from the cathode ray tube (CRT) to the liquid crystal display apparatus (LCD apparatus) are widely used in electronic products such as communication products, information products, and consumer products.

As the demand for effectively handling and preserving a large number of data increases, the data are mostly processed by computers and the images are presented by flat panel display apparatuses. However, the size and weight of the conventional flat panel display apparatus are not more advantageous compared to the paper prints that are easy to read and carry. Moreover, as the battery power of the flat panel display apparatus is used up without connecting to an external power source, the apparatus cannot be used. On the contrary, the paper prints do not have such problem. Therefore, an e-paper (electronic paper) apparatus with the advantages of paper prints and benefits of electronic products such as data processing and environmental protection comes into existence.

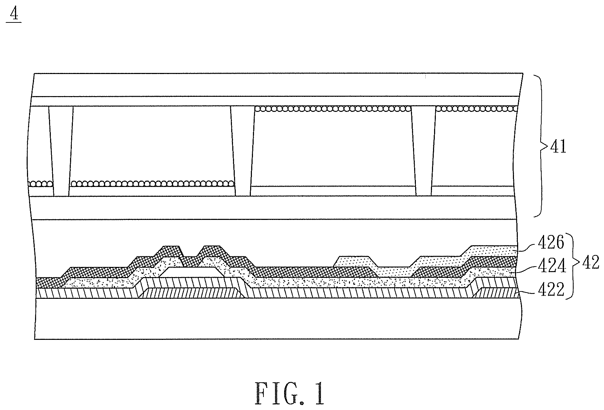

With reference to FIG. 1, the conventional e-paper includes an e-paper body 41 and a driving substrate 42. The allocation of the driving substrate 42 imitates that of the substrate in the LCD display panel for driving the e-paper body 41. The driving substrate 42 has a common line 422, a data line 424, and a pixel electrode 426. In the prior art, the data line 424 is crossingly disposed with the common line 422 and a storage capacitance Cst is formed between the common line 422 and the pixel electrode 426.

The storage capacitance Cst is used to maintain the written voltage signal level while updating the image frame. The difference between the driving substrate 42 of such an e-paper apparatus 4 and the driving substrate of an LCD panel is that the pixel structure on the driving substrate 42 of the e-paper apparatus 4 is square and the pixel structure on the LCD panel is rectangular (e.g. length : width = 1:3). Additionally, since the e-paper apparatus 4 is a non-transmissive display apparatus, the proportion of the area disposed with the common line 422 is larger than that of the area disposed with the common line of LCD panel (i.e. regardless of the aperture ratio). Thus, the area disposed with the pixel electrode 426 of the driving substrate 42 may be larger than that disposed with the pixel electrode of the LCD panel, so as to increase capacity of the formed storage capacitance.

In general, an energy amount ΔE is consumed for changing the voltage difference ΔV between the two storage voltages of the storage capacitance Cst, the correlation between ΔE and ΔV being as follows:

$$\Delta E = \frac{1}{2} \times C \times (\Delta V)^2$$

C is the value of the storage capacitance. However, the image data of the e-paper apparatus 4 is transmitted through the data line 424, such that the voltage signal of the data line 424 varies quite often. A coupling capacitor is formed with the crossing disposition of the data line 424 and the common line 422, and this leads to the increase in capacitive load of the e-paper apparatus 4 as well as the power consumption. Therefore, it is an important subject to enhance the endurance ability and to reduce the power consumption of the e-paper apparatus 4 with limited battery power supply.

WO-01/07961 discloses a system and method of use of a storage capacitor to improve the appearance and addressing characteristics of an electronically driven display. The capacitor is formed by the overlap of portions of electrodes used to address different pixels, or by the overlap of an addressing line and a conductor. An insulator layer situated between the capacitor electrodes can be the same insulator layer present in an FET transistor used to address the pixel. Methods of use of capacitors to achieve improved display addressing are disclosed. A first metal layer also having a first storage electrode is not disclosed.

US 2006/273348 discloses a field-effect transistor including an electrically conductive substrate; a first insulating film coating the electrically conductive substrate; a gate electrode disposed on the electrically conductive substrate with the first insulating film interposed therebetween; a source electrode; a drain electrode opposing the source electrode with the channel therebetween; a second insulating film covering the gate electrode; and a semiconductor layer having a width larger than a width of the gate electrode in the channel width direction and being partly provided on the gate electrode with the second insulating film interposed therebetween so that the gate electrode, the second insulating film, and the semiconductor layer are laminated in the channel.

EP 0 450 9 41 B1 discloses that an active matrix display device includes a pair of insulated substrates, pixel electrodes arranged in matrix on an inner side of the first insulated substrate, signal lines for supplying an image signal, the signal line connecting one pixel electrode to another, wherein the signal line is covered with an insulating layer, and the pixel electrodes are formed on the insulating layer.

## SUMMARY OF THE INVENTION

In view of the foregoing, the present invention is to provide a driving substrate for an e-paper apparatus and an e-paper apparatus enabling a decrease in capacitive load. The above object is solved by a driving substrate of an e-paper apparatus according to claim 1 , and by an e-paper apparatus according to claim 6. Further advantageous embodiments are the subject-matter of the dependent claims.

To achieve the above, the present invention provides a driving substrate of an e-paper apparatus including a first metal layer, a second metal layer, and a pixel electrode. The first metal layer has a scan line and a first storage electrode, and the second metal layer has a data line and a common line. The scan line and the data line are disposed crossingly. The common line is substantially disposed parallel to the data line and disposed crossingly with the scan line. The pixel electrode is disposed over the common line and is electrically connected to the first storage electrode through a via.

As mentioned above, in the e-paper apparatus and the driving substrate thereof according to the present invention, the common line is substantially disposed parallel to the data line and is disposed crossingly with the scan line. The second scan line may be used as a storage electrode, such that the capacitive load of the data line can be decreased so as to reduce the power consumption of the e-paper apparatus and the driving substrate thereof.

## BRIEF DESCRIPTION OF THE DRAWINGS

The invention will become more fully understood from the detailed description and accompanying drawings, which are given for illustration only, and thus are not limitative of the present invention, and wherein:

FIG. 1 is a cross-sectional view of a conventional e-paper apparatus;

FIG. 2 is a cross-sectional view of an e-paper apparatus according to a first embodiment of the present invention;

FIG. 3 is a schematic view of a driving substrate of the e-paper apparatus according to the first embodiment of the present invention;

FIG. 4 is a cross-sectional view of the e-paper apparatus according to the first embodiment of the present invention;

FIG. 5 is another schematic view of the driving substrate of the e-paper apparatus according to the first embodiment of the present invention;

FIG. 6 is a cross-sectional view of an e-paper apparatus according to a further embodiment that serves for a better understanding of the present invention; and

FIG. 7 is a schematic view of a driving substrate of the e-paper apparatus according to FIG. 6.

## DETAILED DESCRIPTION OF THE INVENTION

The present invention will be apparent from the following detailed description, which proceeds with reference to the accompanying drawings, wherein the same references relate to the same elements.

FIRST EMBODIMENT

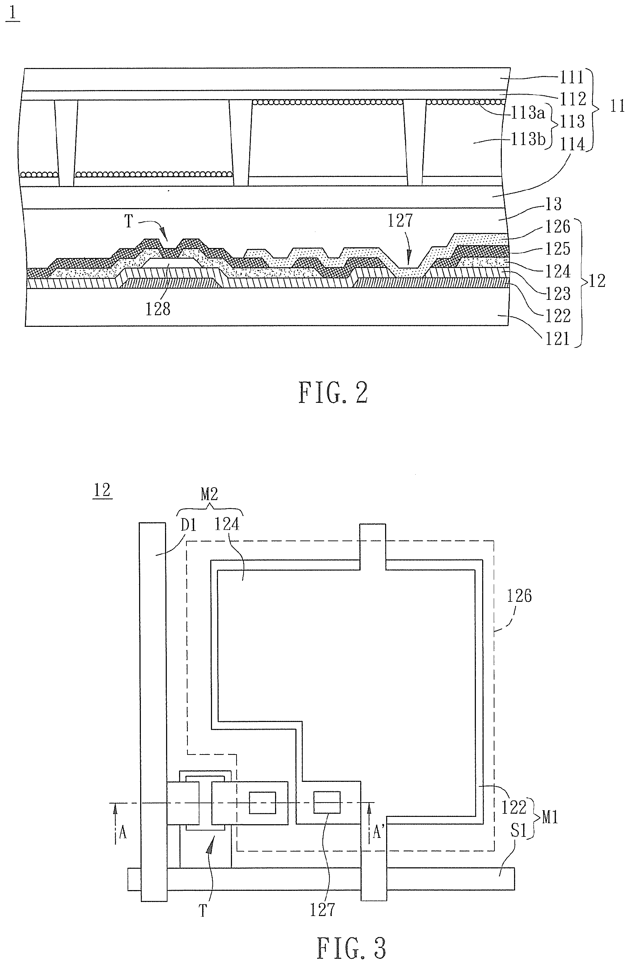

FIG. 2 is a cross-sectional view of an e-paper apparatus 1 according to the first embodiment of the present invention. With reference to FIG. 2, the e-paper apparatus 1 includes an e-paper body 11 and a driving substrate 12, which may be connected to the e-paper body 11 through an adhesive layer 13.

The e-paper body 11 includes an upper substrate 111, a transparent electrode layer 112, an electrophoretic material 113 and a lower substrate 114. The transparent electrode layer 112 is disposed opposite to the driving substrate 12 and the upper substrate 111 is disposed on a side of the transparent electrode layer 112. In practice, the material of the transparent electrode layer 112 may be indium tin oxide (ITO), aluminum zinc oxide (AZO), indium zinc oxide (IZO), or cadmium tin oxide.

The electrophoretic material 113 is disposed between the transparent electrode layer 112 and the lower substrate 114, and includes a plurality of charged particles 113a and a dielectric solution 113b. The charged particles 113a are dispersed in the dielectric solution 113b.

Referring to FIG. 2, the e-paper body 11 further includes a plurality of microcup structures and the electrophoretic material 113 is accommodated in the microcup structures, respectively. In addition, in the embodiment, the electrophoretic material 113 is not limited to be disposed in the microcup structures. In practice, the microcup structures may be replaced by a plurality of microcapsules, such that the electrophoretic material 113 is accommodated in the microcapsules, respectively.

FIG. 3 is a top view of one of the pixels in the driving substrate 12 of the e-paper apparatus according to the first embodiment, and the cross section of the driving substrate 12 in FIG. 2 is the cross section along a line A-A' in FIG. 3. With reference to FIGS. 2 and 3, the driving substrate 12 has a first metal layer M1, a second metal layer M2, and a pixel electrode 126.

The first metal layer M1 has a scan line S1 and a first storage electrode 122. The second metal layer M2

has a data line D1 and a common line 124. The data line D1 has a first extending direction and the scan line S1 has a second extending direction, and the scan line S1 and the data line D1 are disposed crossingly. In practice, the second extending direction is substantially perpendicular to the first extending direction.

The common line 124 is substantially disposed parallel to the data line D1 and crossingly disposed with the scan line S1. The e-paper apparatus 1 of the embodiment is a reflective e-paper apparatus, so a larger aperture ratio is not needed in the design of e-paper apparatus 1. Therefore, the areas of the first storage electrode 122 and the common line 124 are larger than half of the pixel electrode 126, respectively. In practice, the common line 124 is a second storage electrode.

The pixel electrode 126 is disposed over the common line 124 and the pixel electrode 126 is electrically connected to the first storage electrode 122 through a via 127. The pixel electrode 126 is shown by dotted line in FIG. 3 for easy illustration. In practice, the pixel electrode 126 is substantially square.

Referring to FIG. 2, the driving substrate 12 of the embodiment further includes a substrate 121, an insulating layer 123 and a passivation layer 125. The first metal layer M1 is formed over the substrate 121, which may be a glass substrate, a plastic substrate, a circuit board, or a flexible printed circuit board depending on the requirement of e-paper apparatus 1. The insulating layer 123 is disposed between the first storage electrode 122 and the common line 124, and the passivation layer 125 is disposed between the common line 124 and the pixel electrode 126.

A first storage capacitance is formed between the pixel electrode 126 and the common line 124. Additionally, the pixel electrode 126 is electrically connected to the first storage electrode 122 through a via 127, hence the first storage electrode 122 and the pixel electrode 126 are equipotential. A second storage capacitance is formed between the common line 124 and the first storage electrode 122. In the embodiment, the equivalent storage capacitance of the e-paper apparatus 1 connects the first storage capacitance with the second storage capacitance in parallel. Compared to the prior art, the e-paper apparatus 1 of the embodiment has a larger equivalent storage capacitance.

It is noted that in the embodiment, the common line 124 is crossingly disposed with the scan line S1 but the data line D1. Because compared to the voltage variation frequency of the data line D1, the scan line S1 has a lower voltage variation frequency since the scan line S1 is in a low voltage level most of the time and in a high voltage level only in a short period of time. Therefore, by crossingly disposing the common line 124 and the scan line S1, it is more likely for the common line 124 not to form a cross-over capacitance on the data line D1 and the capacitive load on the data line D1 can be prevented from increasing, so as to reduce the power consumption of the e-paper apparatus 1 and its driving substrate 12.

Referring to FIG. 2, the driving substrate 12 further includes a thin film transistor T, which the drain electrode is electrically connected to the pixel electrode 126. As the thin film transistor T is driving the pixel electrode 126, a voltage difference is generated between the pixel electrode 126 and the transparent electrode layer 112 and the charged particles 113a tends to move toward the pixel electrode 126 or the transparent electrode layer 112 having the electric charge with opposite polarity of the charged particles 113a. Thus, the charged particles can pass through and apply the voltage to the two electrode layers 126 and 112, so as to determine the displayed color of the dielectric solution 113b or the charged particle 113a and change the displayed color by applying the inverse voltage.

In practice, the driving substrate 12 of the e-paper apparatus 1 may be embodied by the semiconductor manufacturing process techniques, in which the techniques that are categorized by the number of photomasks include five-photomask manufacturing process and four-photomask manufacturing process. As the driving substrate 12 of the e-paper apparatus 1 is embodied by the five-photomask manufacturing process (as shown in FIG. 2), a semiconductor layer 128 is located only in the region of the thin film transistor T. As the driving substrate 12 of the e-paper apparatus 1 is embodied by the four-photomask manufacturing process (not shown), in addition to being disposed in the thin film transistor T, the semiconductor layer 128 is further disposed between the second metal layer M2 and the substrate 121.

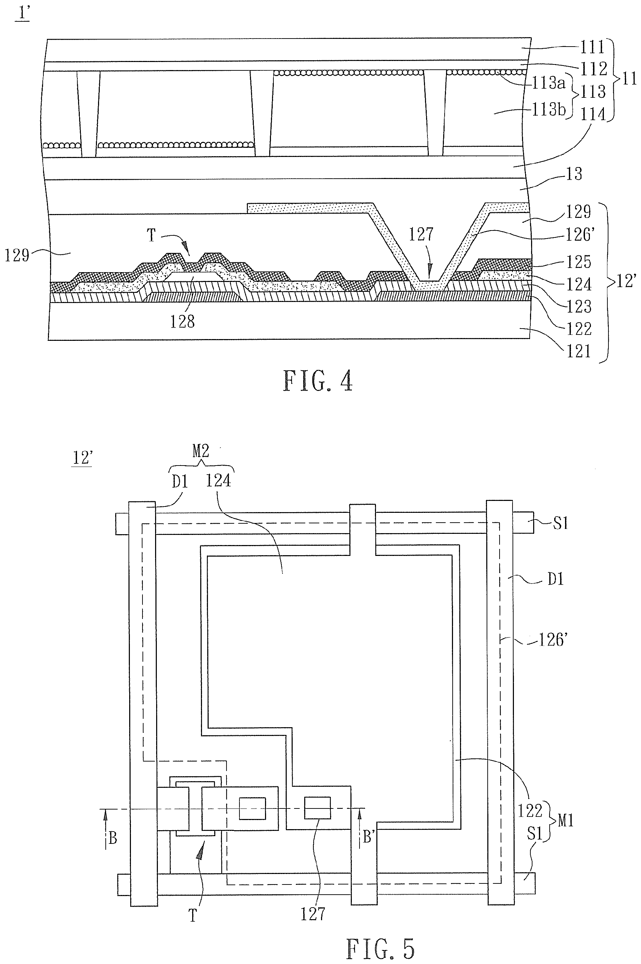

FIG. 4 is a cross-sectional view of the driving substrate 12' embodied by the five-photo mask manufacturing process. The most significant difference between FIG. 2 and FIG. 4 is that in FIG. 4, after the maximum feasible area (i.e. the maximum aperture ratio) of the pixel electrode 126' is obtained in the limited range of pixel area, a photolithography process of polymer film on array (PFA) may be added. The PFA process is to dispose a dielectric layer 129 between the pixel electrode 126' and the substrate 121 and the material of the dielectric layer 129 may be a material with low dielectric constant.

FIG. 5 is a top view of one of the pixels on the driving substrate 12' of the e-paper apparatus 1' in FIG. 4, and the cross section of the driving substrate 12' in FIG. 4 is the cross section along a line B-B' in FIG. 5. In practice, the e-paper apparatus 1' is to dispose the dielectric layer 129 between the pixel electrode 126' and the substrate 121 by PFA process, such that the pixel electrode 126' can overlap the scan line S1 and data line D1, so as to obtain the maximum area of the pixel electrode 126'. Furthermore, without considering the yield of the driving substrate 12', the pixel electrode 126' may cover the thin film transistor T by PFA process.

FURTHER EMBODIMENT

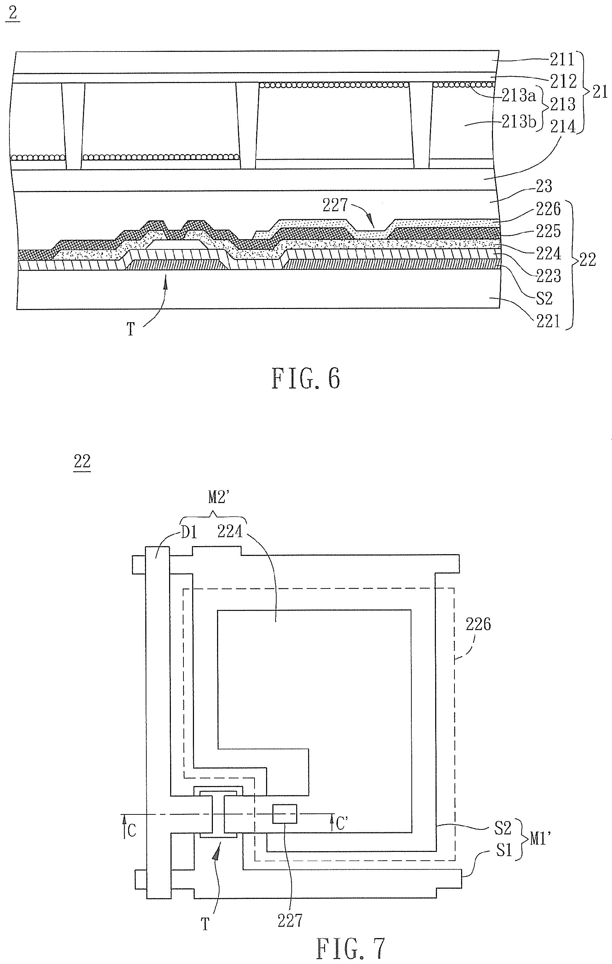

FIG. 6 is a cross-sectional view of the e-paper apparatus 2 according to a further not claimed embodiment that serves for a better understanding of the present invention. The e-paper apparatus 2 includes an e-paper body 21 and a driving substrate 22. The e-paper body 21 is connected to the driving substrate 22 by an adhesive layer 23. The technical features and functions of the e-paper body 21 and adhesive layer 23 are the same as the e-paper body 11 and adhesive layer 13 of the first embodiment, so a detailed description is omitted herein. The driving substrate 22 is illustrated as follows.

FIG. 7 is a top view of one of the pixels on the driving substrate 22 of the e-paper apparatus 2 according to FIG. 6, and the cross section of the driving substrate 22 in FIG. 6 is the cross section along a line C-C' in FIG. 7. With reference to FIGS. 6 and 7, the driving substrate 22 has a first metal layer M1', a second metal layer M2', and a pixel electrode 226.

The first metal layer M1' has a first scan line S1 and a second scan line S2 of another pixel. The second metal layer M2' has a data line D1 and a first storage electrode 224, and the data line D1 has a first extending direction. The first scan line S1 and the second scan line S2 have a second extending direction, respectively. The first scan line S1 and second scan line S2 are crossingly disposed with the data line D1, respectively. In practice, the second extending direction is substantially perpendicular to the first extending direction.

Since the e-paper apparatus 2 is a reflective e-paper apparatus, a larger aperture ratio is not needed in the design. Hence the areas of the second scan line S2 and the first storage electrode 224 is larger than half of the area of the pixel electrode 226, respectively.

The pixel electrode 226 is disposed over the second scan line S2 and is electrically connected to the first storage electrode 224 through a via 227. The pixel electrode 226 is shown by dotted line in FIG. 7 for easy illustration. In practice, the pixel electrode 226 is substantially square.

Referring to FIG. 6, the driving substrate 22 further includes a substrate 221, an insulating layer 223, and a passivation layer 225. The functions and features of the substrate 221 are the same as those of the substrate 121 of the driving substrate 12 in FIG. 1, thus a detailed description is omitted herein. The first metal layer M1' is formed over the substrate 221, the insulating layer 223 is disposed between the second scan line S2 and the first storage electrode 224, and the passivation layer 225 is disposed between the first storage electrode 224 and the pixel electrode 226. The passivation layer 225 has a via 227, such that the pixel electrode 226 is electrically connected to the first storage electrode 224. Therefore, the pixel electrode 226 and the first storage electrode 224 are equipotential, and this forms a storage capacitance on gate between the first storage electrode 224 and the second scan line S2 of the adjacent pixel.

It is noted that the second scan line S2 in the embodiment is used as a second storage electrode to form a storage capacitance with the first storage electrode 224. The second scan line S2 has a lower voltage variation frequency compared to the data line D1 since the second scan line S2 is in low voltage level most of the time and in a high voltage level only for a short period of time (while the thin film transistor T is turned on). Moreover, the image update frequency of the e-paper apparatus 2 is lower than that of the conventional liquid crystal display; hence the capacitive load of the first data line D1 can be prevented from increasing by using the second scan line S2 as the second storage electrode in the e-paper apparatus 2 according to the equation of the capacitance power consumption ΔE, so as to reduce the power consumption of the e-paper apparatus 2.

To sum up, in the e-paper apparatus and its driving substrate according to the present invention, the common line is substantially disposed parallel to the data line and crossingly disposed with the scan line, or the second scan line may be used as a storage electrode, such that the capacitive load of the data line can be decreased so to reduce the power consumption of the e-paper apparatus and the driving substrate thereof.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

**Claims**

1. A driving substrate (12) of an e-paper apparatus, comprising:

    a first metal layer (M1) having a scan line (S1);
    a second metal layer (M2) having a data line (D1) and a common line (124), wherein the scan line (S1) and the data line (D1) are crossingly disposed; and
    a pixel electrode (126) disposed over the common line (124),
    **characterized in that** the first metal layer (M1) further comprises a first storage electrode (122), wherein portions of the common line (124) are extended into a pixel area in such a way that they form a second storage electrode substantially overlapping the first storage electrode (122) but not an adjacent data line (D1), the common line (124) is substantially disposed parallel to the data line (D1) and the common line (124) and the scan line (S1) are crossingly disposed, and **in that** the pixel electrode (126) is electrically connected to the first storage electrode (122) through a via (127).

2. The driving substrate according to claim 1, wherein a first storage capacitance is formed between the pixel electrode (126) and the common line (124), and a second storage capacitance is formed between the common line (124) and the first storage electrode (122).

3. The driving substrate according to claim 1 or 2, wherein the pixel electrode (126) is substantially square.

4. The driving substrate according to any of the preceding claims, wherein the areas of the common line and the first storage electrode are larger than half of the area of the pixel electrode, respectively.

5. The driving substrate according to any of the preceding claims, wherein an e-paper body (11) is disposed opposite to the driving substrate (12).

6. An e-paper apparatus, comprising:

an e-papar body (11); and
a driving substrate (12) according to any of the preceding claims, wherein said driving substrate (12) is disposed opposite to the e-paper body (11).

**Patentansprüche**

1. Steuerungssubstrat (12) einer E-Papier-Vorrichtung, umfassend:

eine erste Metallschicht (M1) mit einer Abtastzeile (S1);
eine zweite Metallschicht (M2) mit einer Datenzeile (D1) und einer gemeinsamen Zeile (124), wobei die Abtastzeile (S1) und die Datenzeile (D1) kreuzweise angeordnet sind; und
eine Pixelelektrode (126), die über der gemeinsamen Zeile (124) angeordnet ist,
**dadurch gekennzeichnet, dass** die erste Metallschicht (M1) weiterhin eine erste Speicherelektrode (122) aufweist, wobei Abschnitte der gemeinsamen Zeile (124) sich derart bis in einen Pixelbereich erstrecken, dass diese eine zweite Speicherelektrode ausbilden, die im Wesentlichen mit der ersten Speicherelektrode (122) aber nicht mit einer angrenzenden Datenzeile (D1) überlappt, wobei die gemeinsame Zeile (124) im Wesentlichen parallel zu der Datenzeile (D1) angeordnet ist und die gemeinsame Zeile (124) und die Abtastzeile (S1) kreuzweise angeordnet sind, und dass die Pixelelektrode (126) mit der ersten Speicherelektrode (122) über eine Durchkontaktierung (127) elektrisch verbunden ist.

2. Steuerungssubstrat nach Anspruch 1, bei dem zwischen der Pixelelektrode (126) und der gemeinsamen Zeile (124) eine erste Speicherkapazität ausgebildet ist und wobei zwischen der gemeinsamen Zeile (124) und der ersten Speicherelektrode eine zweite Speicherkapazität (122) ausgebildet ist.

3. Steuerungssubstrat nach Anspruch 1 oder 2, wobei die Pixelelektrode (126) im Wesentlichen quadratisch ist.

4. Steuerungssubstrat nach einem der vorhergehenden Ansprüche, wobei die Flächen der gemeinsamen Zeile und der ersten Speicherelektrode jeweils größer als die Hälfte der Fläche der Pixelelektrode sind.

5. Steuerungssubstrat nach einem der vorhergehenden Ansprüche, wobei ein E-Papier-Körper (11) gegenüberliegend dem Steuerungssubstrat (12) angeordnet ist.

6. E-Papier-Vorrichtung, umfassend:

einen E-Papier-Körper (11); und
ein Steuerungssubstrat (12) nach einem der vorhergehenden Ansprüche, wobei das Steuerungssubstrat dem E-Papier-Körper (11) gegenüberliegend angeordnet ist.

**Revendications**

1. Un substrat de commande (12) d'un appareil de papier électronique, comprenant:

une première couche métallique (M1) ayant une ligne de balayage (S1) ;

une second couche métallique (M2) ayant une ligne de données (D1) et une ligne commune (124), dans laquelle la ligne de balayage (S1) et la ligne de données (D1) sont disposées entrecroisées ; et
une électrode de pixel (126) disposée sur la ligne commune (124),
**caractérisé en ce que** la première couche métallique (M1) comporte en outre une première électrode de stockage (122), dans laquelle des parties de la ligne commune (124) s'étendent dans une aire de pixel de manière à former une seconde électrode de stockage recouvrant substantiellement la première électrode de stockage (122) mais non une ligne de données adjacente (D1), la ligne commune (124) étant disposée substantiellement parallèle à la ligne de données (D1) et la ligne commune (124) et la ligne de balayage (S1) étant disposée entrecroisée, et **en ce que** l'électrode de pixel (126) est électriquement connectée à la première électrode de stockage (122) via une ligne conductrice (127).

2. Le substrat de commande selon la revendication 1, dans lequel une première capacité de stockage est formée entre l'électrode de pixel (126) et la ligne commune (124), et une seconde capacité de stockage est formée entre la ligne commune (124) et la première électrode de stockage (122).

3. Le substrat de commande selon la revendication 1 ou 2, dans lequel l'électrode de pixel (126) est sensiblement carrée.

4. Le substrat de commande selon l'une quelconque des revendications précédentes, dans lequel les zones de la ligne commune et de la première électrode de stockage sont supérieures à la moitié de la surface de l'électrode de pixel, respectivement.

5. Le substrat de commande selon l'une quelconque des revendications précédentes, dans lequel un corps de E -document est disposée opposée au substrat de commande (12).

6. Un appareil de E-document, comprenant :

   un corps de E-document (11) ; et
   un substrat de commande (12) selon l'une quelconque des revendications précédentes, dans lequel ledit substrat de commande (12) est disposée à l'opposée du corps de E-document.

FIG. 1

1

FIG. 2

FIG. 3

1'

FIG. 4

12'

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0107961 A
- US 2006273348 A
- EP 0450941 B1